(19) Europäisches Patentamt
European Patent Office
Office européen des brevets

(11) Publication number: **0 395 316 A2**

(12) **EUROPEAN PATENT APPLICATION**

(21) Application number: **90304258.8**

(51) Int. Cl.5: **C08G 65/26, C08G 18/48**

(22) Date of filing: **20.04.90**

The title of the invention has been amended (Guidelines for Examination in the EPO, A-III, 7.3).

(30) Priority: **20.04.89 JP 98840/89**

(43) Date of publication of application: **31.10.90 Bulletin 90/44**

(84) Designated Contracting States: **DE FR GB IT NL**

(71) Applicant: **MITSUI TOATSU CHEMICALS INC.**
**No. 2-5, Kasumigaseki 3-chome**
**Chiyoda-Ku Tokyo 100(JP)**

(72) Inventor: **Nakajima, Toshikazu**
**6-17-5 Ikegami, Ohta-Ku**
**Tokyo, 146(JP)**
Inventor: **Matsubara, Kiyoshi**
**629 Endo**
**Fujisawa-Shi, Kanagawa-ken 252(JP)**
Inventor: **Ueno, Kaoru**
**669, Kajigaya-Cho, Sakae-Ku**
**Yokohama-Shi, Kanagawa-Ken 247(JP)**

(74) Representative: **Hayward, Denis Edward Peter et al**
**Lloyd Wise, Tregear & Co. Norman House**
**105-109 Strand**
**London WC2R 0AE(GB)**

# (54) Process for the preparation of a polyether polyol.

(57) A process for preparing polyether polyols by the addition polymerization of alkylene oxide to active hydrogen containing compounds in the presence of the amine catalyst represented by the following formula :

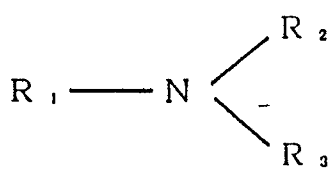

( I )

wherein $R_1$ is an alkyl group or an alkenyl group having from 8 to 20 carbon atoms and $R_2$ and $R_3$ are independently a hydrogen atom or an alkyl group having from 1 to 8 carbon atoms.

The polyether polyol obtained has a light hue, faint foreign odor and an excellent quality as a material for rigid polyurethane forms.

EP 0 395 316 A2

# PROCESS FOR PREPARATION OF POLYETHER POLYOL

The present invention relates to a process for the preparation of a polyether polyol for use in the production of polyurethane foams.

More particularly, the invention relates to a process for the preparation of a polyether polyol by the addition of an alkylene oxide to an active hydrogen containing compound comprising using a specific amine compound as an addition polymerization catalyst.

(b) Description of the Prior Art

The polyether polyol used for the resin component in the production of rigid polyurethane foams has a hydroxyl value of generally in the range of 300 to 800 mg KOH/g, and is prepared by reacting an active hydrogen containing compound with alkylene oxide in the presence of a basic catalyst.

The active hydrogen containing compound used as the starting material for the polyether polyol used in the production of rigid polyurethane foams having good properties has been utilized, in view of functionality and safety, generally in the form of a mixture of two or more compounds selected from sucrose, sorbitol, aromatic amine, aliphatic amine and polyhydric alcohol.

However, sucrose and sorbitol are solid at room temperature to 110 °C and hence have caused many problems such as a heavy load for stirring in a reactor, very slow addition rate of alkylene oxide in the early stage of the reaction, and deposition of unreacted sucrose or sorbitol in the reaction mixture after finishing the addition reaction of alkylene oxide.

The preferred basic catalysts for use in the reaction are alkali metal hydroxides such as sodium hydroxide and potassium hydroxide [Japanese Patent Publication SHO 48-19560(1973), 48-13720(1973) and other many patent publications] , lower alkyl tertiary amines such as triethylamine [Japanese Patent Publication SHO 46-27815(1971)] , dimethylethanolamine [USP 4332936] , and N,N,N′,N′-tetramethyl-1,4-butanediamine [Japanese Patent Publication SHO 44-2446(1969)] .

A process using lower alkyl secondary amines has been disclosed in BP 1082673. A process using N-alkyl tertiary polyamine catalysts having further strong basicity has also been disclosed in Japanese Patent Publication SHO 52-798(1977). These processes using these lower alkyl secondary and tertiary amines and N-alkyl tertiary polyamines as catalysts have been disadvantageous in that (1) the product polyether polyol has a strong catalytic action on the urethane reaction in the production of polyurethane foams, (2) the product has a bad hue, and (3) the product has strong odor.

USP 4332936 has disclosed a process for preparing polyfunctional polyether polyols in the presence of an amine catalyst by using dimethylformamide as a solvent for dissolving a solid initiator.

The use of dimethylformamide solvent is the essential requirement for the invention. Any of the amine catalysts used for the invention are lower alkyl amines. The disadvantage of the invention is the inevitable use of a solvent such as dimethylformamide which is unnecessary for the production of polyurethane resin.

Polyether polyol obtained by the addition of an alkylene oxide to a mixture of sucrose as a base material with aliphatic amine, aromatic amine and polyhydric alcohol has recently been required for the production of rigid polyurethane foams in view of enhancement on the reactivity of the polyether polyol with organic polyisocyanate, improvement of physical properties of rigid foams due to an increase in functionality and the selection of a diluent for viscosity reduction.

But when the above described alkali metal hydroxides are used as the catalyst for adding alkylene oxide to the mixture of sucrose, aliphatic amine, aromatic amine and polyhydric alcohol, ureacted sucrose is deposited in the reaction mixture at the end of the alkylene oxide addition reaction. Alternatively, even though undeposited, a large amount of unreacted sucrose remains in the product after neutralization and purification and gradually separates after several months from the polyether polyol. Thus, the quality of the product becomes unstable.

With respect to the production process, the residual sucrose leads to various problems such as difficulty in filtration due to sucrose crystals in the neutralization and purification steps, and waste disposal after the neutralization and purification treatment. Also in the production of polyurethane foams by reacting with an organic polyisocyanate, the residual sucrose causes problems such as clogging of feed lines due to the presence of precipitate in the foam dispensing equipment and impairment of hue. Also in the initiator system containing no sucrose, the impairment of hue has ben an unavoidable problem. On the other hand, when conventionally known lower alkyl secondary amines or tertiary amines are used, polymerization activity is low and it is hence difficult to obtain polyether polyol having a hydroxyl value which is generally

used for the production of rigid polyurethane forms. In order to obtain such kind of polyether polyol, an extremely large amount of the catalyst must be employed and hence unfavorable effects can occur such as impairment of hue, increase in amine odor, and problems on the reactivity in the production step of rigid polyurethane foams due to residual amine catalyst in polyether polyol. As mentioned above, the conventionally known processes using lower alkyl amines as the catalyst lead to various problems on the quality of the polyether polyol product.

A process for preparing polyether polyols by the addition polymerization of alkylene oxide to active hydrogen containing compounds consisting of "a carbohydrate and aromatic compound" and/or "an aliphatic chain compound" in the presence of an amine catalyst represented by the following formula:

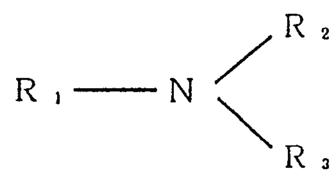

( I )

wherein $R_1$ is an alkyl group or an alkenyl group having from 8 to 20 carbon atoms, $R_2$ and $R_3$ are a hydrogen atom or an alkyl group having from 1 to 8 carbon atoms.

The process of the present invention is characterized by the preparation of a polyether polyol of constant quality and high reactivity through fewer purification steps.

Additionally, the polyether polyol obtained has a light hue, a low level of foreign odor and excellent quality as a raw material for rigid polyurethane foams.

The present inventors have carried out an intensive investigation in order to find a novel preparation process for the preparation of polyether polyol by overcoming the above problems.

As a result, they have found a process for the preparation of polyether polyol which contains no unreacted sucrose at all, has a high whiteness and good physical properties, requires no purification and filtration steps, and gives no adverse effects on the reactivity in the production of rigid polyurethane foam. Thus, the present invention has been achieved.

That is one aspect of the present invention is a process for the preparation of a polyether polyol by adding an alkylene oxide to a single compound or a mixture of compounds selected from an active hydrogen containing polyfunctional compound consisting of an aromatic amine, aliphatic amine and a polyhydroxy alcohol comprising conducting addition polymerization in the presence of an amine catalyst represented by the formula ( I ) :

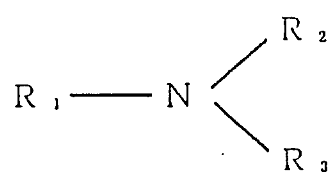

( I )

wherein $R_1$ is an alkyl or alkenyl group having from 8 to 20 carbon atoms and $R_2$ and $R_3$ are a hydrogen atom or an alkyl group having from 1 to 8 carbon atoms.

Exemplary addition polymerization catalysts suitable for use in the process of the present invention include dimethyloctylamine, trioctylamine, dimethyldecylamine, dimethyldodecylamine, dimethylmyristylamine, dimethylpalmitylamine, dimethyloleylamine, dimethylstearylamine, dimethyllinoleylamine and dimethyllinolenylamine. No particular limitation is imposed upon the amount of the addition polymerization catalyst. However, the catalyst is usually used in the range of 0.01 to 5.0 % by weight, preferably 0.1 to 1.0 % by weight per weight of the product obtained by the reaction.

The active hydrogen containing compound which can be used in the process of the invention includes, for example, water or diols such as ethylene glycol, diethylene glycol, triethylene glycol, propylene glycol, dipropylene glycol, tripropylene glycol, butane-1,4-diol and butane-1,3-diol; triols such as glycerin, trimethylolethane, trimethylol propane, 3-methyl-1,3,5-pentanetriol and 1,2,6-hexanetriol; tetrols such as pentaerythritol and diglycerin; hexols such as sorbitol; and other aliphatic polyhydroxy compounds; carbohydrates such as glucose, lactose, maltose, sucrose, starch and α-methylglucoside; aromatic polyhydroxy compounds such as bisphenol A and formaldehyde condensation products of various phenols; trialkanolamines such as triethanolamine, tri-isopropanolamine, and other polyhydroxy compound; alkylene

diamines such as ethylenediamine, propylenediamine, butylenediamine; and aromatic amines such as aniline, tolylenediamine, 4,4′-methylenebis(aniline), polymethylenepolyphenylpolyamine, toluidine and naphthylamine. Compounds obtained by the addition of alkylene oxide to the above active hydrogn containing compounds and water can also be used as an active hydrogen containing compound. The active hydrogen containing compound may be used singly or as a mixture and no particular restriction is put upon the mixture ratio. High functionality and low viscosity are required for the polyether polyol used for the production of rigid polyurethane foams. Accordingly, a mixture of the active hydrogen containing multifunctional compound such as sucrose or sorbitol and an active hydrogen containing compound having from 2 to 5 functionality is frequently used for the starting material. Representative examples of the mixture are sucrose/glycerin, sucrose/triethanolamine, sucrose/ethylenediamine and sucrose/diaminodiphenylmethane/glycerin.

Alternatively, polyether polyol is separately prepared from each active hydrogen containing compound in advance, and these polyether polyols thus obtained may be mixed in a prescribed ratio. By this method, the mixing ratio of the starting matrial can be arbitrarily selected and the amount of alkylene oxide added can be varied depending upon use.

The catalyst used in the process of the invention can fully exhibit its function both in the mixed polyether polyol system and in the instance that a single polyether polyol is used.

Exemplary alkylene oxide suitable for use in the invention includes ethylene oxide, propylene oxide, butylene oxide and styrene oxide. The alkylene oxide may be used singly or in combination.

Ratio of starting material /alkylene oxide may be selected suitably, to obtain a desirable OH value.

The desirable OH value of polyether polyol is 300 to 800 mg KOH/g and alkylene oxide per active hydrogen containing compound (equivalent) is 0.5 ~ 3.0.

Reaction conditions such as charging, order of alkylene oxide are described for example USP 4332936, B. P. 1082673, J. P. Tokuko-Sho 48 (1973)-13720, Tokuko-Sho 48 (1973)-19560 which are incorporated by reference in "Description of the Prior Art" and SRI International; Report No. 45 A "Polyols for Making Polyurethanes", Supplement A By Yen-Chen Yen pp 65~100, Process Economics Program (May 1982).

The reaction can be carried out usually in the range of 80 to 150 °C. No particular restriction is imposed upon the atmosphere. However, the reaction is favorably carried out in an inert atmosphere such as nitrogen and helium, or in an atmosphere which substantially contains no other component than the active hydrogen containing compound, alkylene oxide and the catalyst. No particular limitation is placed upon the pressure during the reaction. However, the reaction is preferably conducted under a pressure of 10 $kg/cm^2$ G or less.

The polyether polyol prepared by the process of the present invention can be used as a raw material in the preparation of rigid polyurethane foam using conventionally known methods. The polyether polyol can also be used as a crosslinking agent in the production of flexible polyurethane foams.

The rigid polyurethane foams prepared from the polyether polyol of the invention have excellent properties which permits them to be used as thermal insulation materials, synthetic wood and structural members.

## Example

The present invention will hereinafter be described further in detail by way of examples.

### Example 1

To a 2 ℓ autoclave, 213.3 g of sucrose, 142.3 g of glycerin and 3.6 g of dimethylpalmitylamine were charged. The interior of the autoclave was replaced with dry nitrogen, and the temperature was increased and maintained at 100 °C . Then 844.4 g of propylene oxide was added to the autoclave over 4.5 hours so as to maintain the internal pressure of the autoclave at 4 $kg/cm^2G$ and the contents of the autoclave were further stirred for 4 hours until the internal pressure decreased to 1 kg/ $cm^2G$. After completing the reaction, residual propylene oxide was removed under reduced pressure and collected in a liquid nitrogen cold trap. The reafter the autoclave was cooled to room temperature and the reaction product was removed.

The product thus obtained was a light yellow transparent liquid,and had a hydroxyl value of 451mg KOH/g, viscosity of 5660 cps/25 ° C and PH of 9.9.

The amount of propylene oxide recovered in the cold trap was 12 g. The percentage of reacted propylene oxide was 98.6 %. After standing at 25 °C for a month, no change was found on the physical

properties of the polyether polyol thus obtained.

Comparative Example 1 .

To a 2 ℓ autoclave, 213.3 g of sucrose, 142.3 g of glycerin and 3.6 g of potassium hydroxide were charged. By the same procedures as conducted in Example 1, the interior of the autoclave was replaced with dry nitrogen, the temperature was increased and maintained at 100 °C . Then 844.4 g of propylene oxide was added to the autoclave over 4 hours so as to maintain the internal pressure of the autoclave at 4 kg/cm$^2$G and the contents of the autoclave were further stirred for 3 hours until the internal pressure decreased to 1 kg/ cm$^2$G. After completing the reaction, residual propylene oxide was removed under reduced pressure and collected in a liquid nitrogen cold trap. Thereafter the autoclave was cooled to room temperature and the reaction product was removed.

Unreacted sucrose remained in the reaction product and on the internal surface of the autoclave. The reaction product was filtered through a filter paper No. 5. The residue was dried and weighed. Recovered sucrose was 8.5 g, which corresponded to 4 % of the charged sucrose. The filtrate was neutralized by addition of an aqueous phosphoric acid solution and, after 30 minutes, subjected to dehydration for 2 hours at 100° C under a pressure of about 10 mm Hg. After dehydration, the residue was cooled to 80° C. The precipitated catalyst was filtered off over 3 hours. The polyether polyol thus obtained was a yellow transparent liquid and had a hydroxyl value of 441 mg KOH/g, viscosity of 5250 cps/25 °C and pH of 6.7. After standing for a month, turbidity was found in th polyether polyol obtained.

As seen from the Comparative Example 1, conventional potassium hydroxide catalyst required 12.5 hours for production. On the other hand, Example 1 can produce polyether polyol in 8.5 hours. That is, deposition of unreacted polyol is not found and complex steps such as neutralization, dehydration and filtration can be eliminated and hence time required for the production can be remarkably shortened.

Comparative Example 2

To a 2 ℓ autoclave, 213.3 g of sucrose, 142.3 g of glycerin and 3.6 g of triethylamine were charged and propylene oxide was added by the same procedures as conducted in Example 1.

However, the internal pressure of the autoclave became constant and further reduction of the pressure stopped. Hence the experiment was interrupted. As seen in Table 1, triethylamine catalyst causes a bad hue and a strong amine odor to be imparted to the polyether polyol and it is difficult to obtain the usual hydroxyl value.

Comparative Example 3

To a 2 ℓ autoclave, 213.3 g of sucrose, 142.3 g of glycerin and 3.6 g of pentamethyldiethylenetriamine were charged. By the same procedures as conducted in Example 1, the interior of the autoclave was replaced with dry nitrogen, the temperature was increased and maintained at 100 °C. Then 844.4 g of propylene oxide was added to the autoclave over 3 hours so as to maintain the internal pressure of the autoclave at 4 kg/cm$^2$G and the contents of the autoclave were further stirred for 4 hours until the internal pressure decreased to 1 kg/ cm$^2$G. After completing the reaction, residual propylene oxide was removed under reduced pressure and collected in a liquid nitrogen cold trap. Thereafter the autoclave waa cooled to room temperature and the reaction product was removed.

The product thus obtained was a brown liquid and had a hydroxyl value of 448 mg KOH/g, viscosity of 5630 cps/25 °C and pH of 11.4. The amount of propylene oxide recovered in the cold trap was 11.0 g. The percentage of reacted propylene oxide was 98.7 %.

As understood from Comparative Example 3, the pentamethyldiethylenetriamine catalyst can provide polyether polyol having equivalent hydroxyl value and viscosity to those of Example 1. However the polyether polyol obtained in Comparative Example 3 was a brown liquid, had a strong amine odor and gave a remarkable effect on the foaming properties in the production of rigid polyurethane foam.

Comparative Examples 4 - 6

Polyether polyol was prepared by conducting the same procedures as conducted in Example 1 except that N-methylmorpholine, N,N-dimethylethanolamine and N,N,N′,N′-tetramethyl-1,4-butanediamine were used as the catalyst. Results are illustrated in Table 1.

Example 2

To a 3 ℓ autoclave, 610 g of diaminodiphenylmethane, 610 g of triethanolamine and 9 g of dimethyloctylamine were charged. The interior of the autoclave was replaced with dry nitrogen, the temperature was increased and maintained at 100 °C. Then the pressure of the autoclave was increased to 2 kg/ $cm^2$G with dry nitrogen and 1781 g of ethylene oxide was added over 2 hours and 20 minutes while maintaining the internal pressure in the autoclave at 5 kg/$cm^2$G. After finishing the ethylene oxide addition, the autoclave was further stirred for 1.5 hours until reduction of the internal pressure stopped. After completing the reaction, residual ethylene oxide was removed under reduced pressure and the autoclave was cooled to room temperature. The reaction product was removed from the autclave. The polyether polyol thus obtained was a light yellow transparent liquid and had a hydroxyl value of 461 mg KOH/g, viscosity of 1690 cps/25 °C, and pH of 12.0.

Comparative Example 7

The same procedures conducted in Comparative Example 1 were conducted except 3.6 g of a diethylamine catalyst was used in place of the potassium hydroxide catalyst. The polyether polyol thus obtained had a hydroxyl value of 560 mg KOH/g, and a viscosity of 16800 cps/25 °C. The product was dark colored and had a strong amine odor.

Comparative Example 8

To a 3 ℓ autoclave, 610 g of diaminodiphenylmethane, 610 g of triethanolamine and 9 g of sodium hydroxide were charged and 1781g of ethylene oxide was added by the same procedures as carried out in Example 2. However, the reaction temperature could not be controlled due to a violent heat exotherm. Hence the production was discontinued.

Comparative Example 9

To a 3 ℓ autoclave, 610 g of diaminodiphenylmethane, 610 g of triethanolamine and 2.25 g of sodium hydroxide were charged. By the same procedures as conducted in Example 2, the interior of the autoclave was replaced with dry nitrogen, the temperature was increased and maintained at 100 °C. Then the pressure of the autoclave was increased to 2 kg/$cm^2$G with dry nitrogen and 1781 g of ethylene oxide was added over 2.5 hours while maintaining the internal pressure in the autoclave at 5 kg/$cm^2$G. After finishing the ethylene oxide addition, the autoclave was further stirred for one hour and 40 minutes until reduction of the internal pressure stopped. After completing the reaction, residual ethylene oxide was removed under reduced pressure and the residue was neutralized with an aqueous hydrochloric acid solution. After 30 minutes, the resulting mixture was dehydrated for 2 hours at 100° C under a pressure of about 10 mm Hg, cooled to 80 °C and filtered. The polyether polyol thus obtained was a brown opaque liquid and had a hydroxyl value of 467 mg KOH/g, viscosity of 2700 cps/25 °C and pH of 9.1.

As seen from the Comparative Example 9, the application of alkali metal hydroxides such as potassium hydroxide and sodium hydroxide for the catalyst in the addition polymerization of ethylene oxide using diaminodiphenylmethane and triethanolamine as starting material leads to difficulty in temperature control of the reaction and causes problems on the quality deterioration of the product after neutralization and purification.

Examples 3 - 26

Addition polymerization of alkylene oxide to sucrose, triethanolamine, glycerin etc. was carried out

using various amine catalysts of the invention.

Reaction conditions and analytical results are illustrated in Table 2.

As illustrated in Table 1 and Table 2, it has been found that the catalyst of the present invention can give polyether polyol which has lower hydroxyl value and is excellent in view of hue and amine odor as compared with conventional amine catalysts.

Table - 1

| Comparative Example No. | Polymerization Conditions | | | | | Analytical Results | | | | |
|---|---|---|---|---|---|---|---|---|---|---|
| | Catalyst (g) | Sucrose (g) | Glycerin (g) | Propylene Oxide | | Hydroxyl Value (mgKOH/g) | Viscosity (cp/25°C) | pH | Hue, Gardner No. | Odor |
| | | | | Amount (g) | Feed Time (min.) | | | | | |
| 1 | Potassium hydroxide 3.6 | 213.3 | 142.3 | 844.4 | 240 | 441 | 5250 | 6.7 | G − 5 | Turbidity found. weak |
| 2 | Triethylamine 3.6 | 213.3 | 142.3 | 844.4 | - | 525 | 14800 | 9.9 | G − 8 | strong |
| 3 | Pentamethyldiethylenetriamine 3.6 | 213.3 | 142.3 | 844.4 | 180 | 448 | 5630 | 11.4 | G − 12 | medium |
| 4 | N-Methylmorpholine 3.6 | 213.3 | 142.3 | 844.3 | 260 | 510 | 8060 | 11.1 | G − 8 | strong |
| 5 | N,N-Dimethylethanolamine 3.6 | 213.3 | 142.3 | 844.3 | 250 | 470 | 6400 | 11.2 | G − 6 | medium |
| 6 | N,N,N',N'-Tetramethyl-1,4-butane diamine 3.6 | 213.3 | 142.3 | 844.3 | 180 | 453 | 5620 | 11.5 | G − 8 | medium |
| 7 | Diethylamine 3.6 | 213.3 | 142.3 | 844.3 | 300 | 560 | 16800 | 9.9 | G − 8 | medium |

Table - 1 (continued)

| Comparative Example No. | Polymerization Conditions | | | | | Analytical Results | | | | |
|---|---|---|---|---|---|---|---|---|---|---|
| | Catalyst (g) | Diaminodiphenyl-methane (g) | Triethanol-amine (g) | Ethylene Oxide | | Hydroxyl Value (mgKOH/g) | Viscosity (cp/25°C) | pH | Hue, Gardner No. | Turbidity |
| | | | | Amount (g) | Feed Time (min.) | | | | | |
| 8 | Potassium hydroxide 9 | 610 | 610 | 1781 | | * | | | | |
| 9 | Sodium hydroxide 2.25 | 610 | 610 | 1781 | 150 | 467 | 2700 | 9.1 | G-18 | high |

Note : * Reaction was discontinued due to vigorous heat generation.

Table - 2

| Example No. | Catalyst (g) | Starting material (g) | | | | Alkylene Oxide | | | | Analytical Results | | | |
|---|---|---|---|---|---|---|---|---|---|---|---|---|---|
| | | | | | | Propylene Oxide (g) | Ethylene Oxide (g) | Feed Time (min.) | | Analytical Results | | pH | Hue, Gardner No. |
| | | | | | | | | Propylene Oxide | Ethylene Oxide | Hydroxyl Value (mgKOH/g) | Viscosity (cp/25°C) | | |
| 1 | Dimethylpalmitylamine 3.6 | Sucrose 213.3 | Glycerin 142.3 | | | 844.4 | | 270 | | 451 | 5660 | 9.9 | G – 4 |
| 2 | Dimethyloctylamine 9 | Diamino -diphenyl -methane 610 | Triethanol -amine 610 | | | | 1781 | | 140 | 461 | 1690 | 12.0 | No turbidity G – 6 |
| 3 | Dimethyloctylamine 9 | Sucrose 489 | Triethanol -amine 209 | | | 1530 | | 130 | | 408 | 10500 | 10.5 | G – 5 |
| 4 | Dymethyldecylamine 9 | Sucrose 489 | Triethanol -amine 209 | | | 1530 | | 135 | | 409 | 10550 | 10.3 | G – 5 |
| 5 | Dimethylpalmitylamine 9 | Sucrose 489 | Triethanol -amine 209 | | | 1530 | | 140 | | 410 | 10680 | 9.9 | G – 5 |
| 6 | Dymethyldecylamine 9 | Sucrose 548 | Triethanol -amine 55 | Glycerin 311 | | 2090 | | 100 | | 456 | 5840 | 10.4 | G – 4 |
| 7 | Dimethylmyristylamine 9 | Sucrose 548 | Triethanol -amine 55 | Glycerin 311 | | 2090 | | 110 | | 458 | 5900 | 10.2 | G – 4 |
| 8 | Dimethyloleylamine 9 | Sucrose 548 | Triethanol -amine 55 | Glycerin 311 | | 2090 | | 115 | | 458 | 5920 | 10.0 | G – 4 |
| 9 | Dimethyloctylamine 9 | Sucrose 306 | Tolylene -diamine 350 | Triethanol -amine 218 | | 1850 | | 130 | | 455 | 20050 | 10.6 | G – 9 |

Table - 2 (contiuned)

| Example No. | Catalyst (g) | Starting meterial ( g ) | | | | Alkylene Oxide | | | | Analytical Results | | | |
|---|---|---|---|---|---|---|---|---|---|---|---|---|---|
| | | | | | | Propylene Oxide (g) | Ethylene Oxide (g) | Feed Time (min.) | | Hydroxyl Value (mgKOH/g) | Viscosity (cp/25°C) | pH | Hue, Gardner No. |
| | | | | | | | | Propylene Oxide | Ethylene Oxide | | | | |
| 10 | Dimethylaurylamine 9 | Sucrose 306 | Tolylene -diamine 350 | Triethanol -amine 218 | | 1850 | | 135. | | 457 | 20800 | 10.4 | G - 8 |
| 11 | Dimethylpalmitylamine 9 | Sucrose 306 | Tolylene -diamine 350 | Triethanol -amine 218 | | 1850 | | 140 | | 458 | 21200 | 10.3 | G - 8 |
| 12 | Trioctylamine 9 | Sucrose 306 | Tolylene -diamine 350 | Triethanol -amine 218 | | 1850 | | 145 | | 459 | 21200 | 10.3 | G - 8 |
| 13 | Dymethyloctylamine 9 | Sucrose 420 | Tolylene -diamine 930 | Ethylene -diamine 840 | Triethanol -amine 336 | 2080 | | 70 | | 474 | 11600 | 11.8 | G - 7 |
| 14 | Dimethyllaurylamine 9 | Sucrose 420 | Tolylene -diamine 930 | Ethylene -diamine 840 | Triethanol -amine 336 | 2080 | | 75 | | 476 | 11900 | 11.6 | G - 7 |
| 15 | Dymethylstearylamine 9 | Sucrose 420 | Tolylene -diamine 930 | Ethylene -diamine 840 | Triethanol -amine 336 | 2080 | | 80 | | 477 | 11950 | 11.4 | G - 7 |
| 16 | Dimethyldecylamine 9 | Sucrose 428 | Tolylene -diamine 139 | Triethanol -amine 359 | Glycerin 70 | 1800 | 200 | 90 | 30 | 453 | 6780 | 11.6 | G - 8 |
| 17 | Dimethylmyristylamine 9 | Sucrose 428 | Tolylene -diamine 139 | Triethanol -amine 359 | Glycerin 70 | 1800 | 200 | 95 | 30 | 454 | 6820 | 11.4 | G - 8 |
| 18 | Dimethyloleylamine 9 | Sucrose 428 | Tolylene -diamine 139 | Triethanol -amine 359 | Glycerin 70 | 1800 | 200 | 100 | 30 | 456 | 6900 | 11.3 | G - 8 |

Table - 2 (concluded)

| Example No. | Catalyst (g) | Starting meterial ( g ) | | | | Alkylene Oxide | | | | Analytical Results | | | |
|---|---|---|---|---|---|---|---|---|---|---|---|---|---|
| | | | | | | Propylene Oxide (g) | Ethylene Oxide (g) | Feed Time (min.) Propylene Oxide | Feed Time (min.) Ethylene Oxide | Analytical Results Hydroxyl Value (mgKOH/g) | Analytical Results Viscosity (cp/25℃) | PH | Hue, Gardner No. |
| 19 | Dimethyloctylamine 9 | Sucrose 173 | Diamino -diphenyl -methane 346 | Glycelin 346 | | 1310 | 330 | 75 | 30 | 500 | 20800 | 11.3 | G − 5 |
| 20 | Dimethyllaurylamine 9 | Sucrose 173 | Diamino -diphenyl -methane 346 | Glycelin 346 | | 1310 | 330 | 80 | 30 | 502 | 21000 | 11.2 | G − 5 |
| 21 | Dimethyllinolenylamine 9 | Sucrose 173 | Diamino -diphenyl -methane 346 | Glycelin 346 | | 1310 | 330 | 85 | 30 | 503 | 21050 | 11.1 | G − 5 |
| 22 | Dymethyloleylamine 9 | Tolylene -diamine 438 | Triethanol -amine 536 | | | 1820 | 200 | 120 | 15 | 474 | 6180 | 12.0 | G − 7 |
| 23 | Trioctylamine 9 | Tolylene -diamine 438 | Triethanol -amine 536 | | | 1820 | 200 | 135 | 20 | 477 | 6300 | 11.8 | G − 7 |
| 24 | Dymethyloctylamine 9 | α -Methyl -glycoside 1020 | | Glycerin 220 | | 1750 | | 240 | | 530 | 17200 | 9.8 | G − 7 |
| 25 | Dimethyldecylamine 9 | α -Methyl -glycoside 1020 | | Glycerin 220 | | 1750 | | 260 | | 533 | 18050 | 9.6 | G − 7 |
| 26 | Dimethyllinoleylamine 9 | α -Methyl -glycoside 1020 | | Glycerin 220 | | 1750 | | 270 | | 538 | 19000 | 9.4 | G − 7 |
| 27 | Dimethylpalmitylamine 7.2 | Sucrose 393.2 | | | | 806.8 | | 175 | | 432 | 150000 | 11.3 | G − 4 |
| 28 | Dimethylstearylamine 7.2 | α -Methyl -glycoside 466.8 | | | | 733.2 | | 300 | | 448 | 31600 | 9.6 | G − 8 |
| 29 | Dimethyloleylamine 7.2 | Penta-erythritol 327.1 | | | | 872.9 | | 165 | | 456 | 2860 | 9.4 | G − 4 |

Reference Example 1, Comparative Reference Examples 1-3

Using the polyether polyol obtained in Example 1, rigid polyurethane foams were prepared and physical properties were tested.

To 100 g of the above polyether polyol, 1.0 g of silicone cell controlling agent L-5420 (a product of Nippon Unicar Co. Ltd.), 35.8 g of Freon-11B (a product of Mitsui Fluoro Chemical Co. Ltd.) 2.3 g of tetramethylhexamethylenediamine and 1.5 g of deionized water were thoroughly mixed to prepare a resin component.

Diphenylmethane diisocyanate having an isocyanate content of 30.8 % by weight was added to the resin component in an amount, of 1.05 times by mole per mole of active hydrogen compound in the resin component. The resulting mixture was vigorously stirred and poured into a carton box having dimensions of 25 cm width × 25 cm length × 18 cm height.

The time on starting the rise of foam (initiation time) and the time when tackiness disappears from the foam surface (tack free time) were measured. Rigid foams thus obtained were aged for 24 hours at room temperature and then physical properties were tested.

Testing methods of physical properties are as follows.

(1) Specific gravity : In accordance with ASTM D-1622 59T

(2) Compressive strength : In accordance with ASTM D-1621 59T

(3) Dimensional stability : A foam having dimensions of 100× 100× 100mm was allowed to stand under conditions illustrated in Table 3. Dimensional stability is indicated by the rate of change in length after standing to the original length.

Physical properties of the foam are illustrated in Table 3. Foaming characteristics and foam properties obtained by using polyether polyols prepared in the presence of potassium hydroxide, pentamethyldiethylenetriamine and N,N,N′,N′-tetramethylpropylenediamine as catalysts are also summarized for the purpose of comparison.

Table - 3

| | Reference Example | Comparative Reference Example | | |
|---|---|---|---|---|
| | 1 | 1 | 2 | 3 |
| Polyether Polyol<br>Catalyst used | Example 1<br>Dimethylpalmitylamine | Comparative Example 1<br>Potassium-hydroxide | Comparative Example 3<br>Pentamethyldiethylenetriamine | Comparative Example 6<br>N,N,N′,N′-Tetramethylbutanediamine |
| Foaming Characteristic(sec.) | | | | |
| Initiation Time | 26 | 26 | 22 | 23 |
| Tack-free Time | 112 | 113 | 99 | 97 |
| Foam Property | | | | |
| Density (g/cm$^3$) | 0.0271 | 0.0272 | 0.0268 | 0.0269 |
| Compressive Strength(kg/cm$^2$) | | | | |
| Parallel to rise (∥) | 2.14 | 2.16 | 2.10 | 2.10 |
| Perpendicular to rise(⊥) | 0.53 | 0.54 | 0.50 | 0.51 |
| Dimensional Stability (%) | | | | |
| 70° C, 100% RH | | | | |
| Parallel to rise (∥) | -0.5 | -0.5 | -0.5 | -0.5 |
| Perpendicular to rise(⊥) | 3.0 | 2.8 | 3.2 | 3.1 |
| 110° C, 100% RH | | | | |
| Parallel to rise (∥) | -0.5 | -0.4 | -0.6 | -0.5 |
| Perpendicular to rise(⊥) | 2.2 | 2.0 | 2.5 | 2.4 |
| -30 ° C, 100% RH | | | | |
| Parallel to rise (∥) | -0.3 | -0.2 | -0.4 | -0.4 |
| Perpendicular to rise(⊥) | -0.3 | -0.3 | -1.0 | -0.8 |

As illustrated in Table 3, foaming characteristics and foam properties of the polyether polyol obtained by using the catalyst of the invention were equivalent to those of the polyether polyol obtained by using potassium hydroxide as the catalyst. However, a remarkable difference was found when compared with polyether polyols prepared in the presence of other amine catalysts which are outside of the scope of the present invention.

Reference example 2, Comparative Reference Example 4

Using the polyether polyol obtained in Example 2, rigid polyurethane foams were prepared and physical properties were tested.

To 100 g of the polyether polyol obtained in Example 2. 1.0 g of silicone cell controlling agent L-5420 (a product of Nippon Unicar Co. Ltd.), 37 g of Freon-11 B (a product of Mitsui Fluoro Chemical Co. Ltd.), 2.0 g of tetramethylhexamethylenediamine, 0.05 g of dibutyltindilaurate and 10 g of trichloroethylphosphate were thoroughly mixed to prepare a resin component and cooled to 5 °C.

Diphenylmethane diisocyanate having an isocyanate content of 30.8 % was previously cooled to 5 °C and added to the resin component in an amount 1.05 times by mole per mole of active hydrogen compound in the resin component. The resulting mixture was vigorously stirred and poured into a carton box having dimensions of 25 cm width × 25 cm length × 18 cm height. Initiation time and tack-free time were measured. The resulting foam was aged for 24 hours and the properties of the foam were measured by the same procedures as conducted in Reference Example 1.

In addition, a combustion test was carried out in accordance with ASTM D-1692 59T. Foam properties are illustrated in Table 4.

Table - 4

| | Reference Example | Comparative Reference Example |
|---|---|---|
| | 2 | 4 |
| Polyether Polyol<br>Catalyst used | Example 2<br>Dimethyl-Octylamine | Comparative Example 9<br>Sodium-hydroxide |
| Foaming Characteristic(sec.) | | |
| Initiation Time<br>Tack-free Time | 7<br>16 | 7<br>16 |
| Foam Property | | |
| Density ($g/cm^3$)<br>Compressive Strength($kg/cm^2$)<br>Parallel to rise (∥)<br>Perpendicular to rise(⊥)<br>Dimensional Stability (%)<br>70 °C, 100% RH<br>Parallel to rise (∥)<br>Perpendicular to rise(⊥)<br>110 °C, 100% RH<br>Parallel to rise (∥)<br>Perpendicular to rise(⊥)<br>-30 °C, 100% RH<br>Parallel to rise (∥)<br>Perpendicular to rise(⊥) | 0.0346<br><br>3.14<br>1.57<br><br><br>0.2<br>1.9<br><br>0.2<br>1.4<br><br>-0.2<br>-0.4 | 0.0350<br><br>3.10<br>1.48<br><br><br>0.4<br>2.1<br><br>0.4<br>1.6<br><br>-0.4<br>-0.6 |
| Combustion Test | Self-quenching | Self-quenching |

## Claims

(1) A process for the preparation of a polyether polyol by the addition polymerization of an alkylene oxide to an active hydrogen containing compound comprising conducting said addition polymerization in the presence of an amine compound catalyst represented by the formula ( I ) :

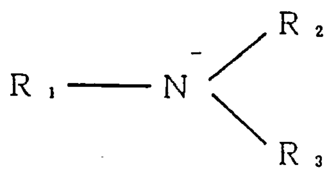

( I )

wherein $R_1$ is an alkyl group or an alkenyl group having from 8 to 20 carbon atoms and $R_2$ and $R_3$ are a hydrogen atom or an alkyl group having from 1 to 8 carbon atoms, respectively.

(2) A process of claim 1 wherein the active hydrogen containing compound is a carbohydrate, aromatic compound and/or an aliphatic compound.

(3) A process of claim 2 wherein the carbohydrate and the aromatic compound are one or more compounds selected from the group consisting of sucrose, sorbitol, α-methylglucoside, aromatic amine and a condensation product of phenol with formaldehyde.

(4) A process of claim 2 wherein the aliphatic chain compound is one or more compound selected from the group consisting of glycerin, diglycerin, alkanolamine and alkylenediamine.

(5) A process of claim 3 wherein the aromatic amine is one or more compound selected from the group consisting of tolylenediamine, 4,4′-methylenebisaniline and polymethylenepolyphenylpolyamine.

(6) A process of claim 4 wherein the alkanolamine is one or more compound selected from the group consisting of ethanolamine, diethanolamine, triethanolamine, isopropanolamine, diisopropanolamine and triisopropanolamine.

(7) A process of claim 1 wherein the alkylenediamine is one or more compound selected from the group consisting of ethylenediamine, propylenediamine and butylenediamine.

(8) A process of claim 1 wherein the alkylene oxide is one or more compound selected from the group consisting of ethylene oxide, propylene oxide, butylene oxide and styrene oxide.

(9) A process of claim 1 wherein $R_1$ in the formula ( I ) is a group selected from the group consisting of an octyl, decyl, lauryl, myristyl, palmityl, stearyl, oleyl, linoleyl and a linolenyl.

(10) A process of claim 1 wherein $R_2$ and $R_3$ in the formula ( I ) are independently selected from the group consisting of a methyl, ethyl, propyl, butyl, pentyl, hexyl, heptyl and an octyl.